# FASCICULE DE BREVET EUROPEEN

(11) **EP 0 495 710 B1**
(45) Date de publication et mention de la délivrance du brevet: **18.12.1996**
(21) Numéro de dépôt: 92400096.1
(22) Date de dépôt: 14.01.1992
(51) Int. Cl.: F23J 15/00, B01D 53/34

(54) **Installation de génération de chaleur comportant des moyens de désulfuration utilisant des absorbants régénérables**
Anlage zur Wärmeerzeugung mit Entschwefelungsvorrichtung durch regenerierbare Absorptionsmittel
Heat generating installation having desulfurization means using regenerable absorbants

(30) Priorité: 17.01.1991 FR 9100546
(43) Date de publication de la demande: 22.07.1992
(73) Titulaire: INSTITUT FRANCAIS DU PETROLE, 92502 Rueil-Malmaison (FR); BABCOCK ENTREPRISE, 93123 La Courneuve (FR)
(72) Inventeur: Martin, Gérard, F-92500 Rueil Malmaison (FR)

(56) Documents cités:
- EP-A- 0 129 273
- EP-A- 0 200 588
- EP-A- 0 214 910
- EP-A- 0 254 402
- EP-A- 0 463 957
- DE-A- 1 542 314
- FR-A- 2 605 242
- FR-A- 2 636 720
- US-A- 4 325 811
- POWER vol. 118, no. 9, Septembre 1974, pages S1 - S20 T.C.ELLIOT 'SO2 REMOVAL FROM STACK GASES'

## Description

La présente invention concerne une installation destinée à générer de la chaleur à partir de la combustion d'un combustible contenant notamment du soufre et de l'azote, avec des émissions réduites d'oxydes de soufre.

Il est connu selon plusieurs publications, de réduire les émissions d'oxyde de soufre, et plus spécifiquement de dioxyde de soufre provenant d'une chaudière du type précité.

De façon classique, ces chaudières comprennent une chambre de combustion, au moins une zone d'échange par convection, une chambre de désulfuration comportant au moins un moyen d'injection d'un absorbant et communiquant avec une première zone d'échange par convection, une première chambre de séparation reliée à ladite première zone d'échange par convection, ladite chambre de séparation ayant au moins une sortie pour l'absorbant usé et une sortie pour les gaz dépollués.

Ainsi, la demande de brevet FR-A-2.636.720 divulgue une chaudière dite "désulfurante" comprenant une chambre de désulfuration disposée entre une chambre de combustion (en amont) et une chambre de récupération de chaleur (en aval), l'ensemble présente l'avantage d'être compact puisque la chambre de désulfuration est intégrée entre la chambre de combustion et la chambre de récupération de chaleur.

La demande de brevet EP-A-0463957 (document selon l'art. 54(3) CBE) constitue un perfectionnement de la demande précédente, puisqu'elle prévoit, afin de maintenir constante la température dans la chambre de désulfuration, quelles que soient les variations de l'allure de fonctionnement de la chaudière, un recyclage d'une partie de l'absorbant utilisé, vers l'entrée de la chambre de désulfuration, ce recyclage étant par ailleurs contrôlé en débit.

L'absorbant injecté dans ces chaudières consiste essentiellement en une matière calcique qui est envoyée, après sulfuration partielle, vers une trémie de stockage.

De même le document EP-A-0 129 273 concerne un procédé pour extraire notamment des oxydes de soufre présents dans des fumées, qui utilise des matières calciques comme absorbant.

Ce type de chaudière dite "désulfurante" conduit donc à la production de quantités non négligeables d'absorbant calcique usé, c'est-à-dire désulfaté. A terme, la quantité d'absorbant rejeté peut, on le comprend aisément, poser des problèmes de stockage.

Les absorbants calciques peuvent représenter chaque année plusieurs millions, voire plusieurs dizaines de millions de tonnes de déchets à stocker, d'où un problème de volume de stockage. En outre, lors de leur stockage, ces absorbants peuvent être mouillés, lessivés et libérer de ce fait les polluants métalliques qu'ils renferment, créant ainsi une pollution des nappes phréatiques.

En outre, on connait par le document EP-A-0 254 402 un procédé de désulfuration selon lequel les particules d'adsorbant sont toutes recyclées après passage dans un désorbeur.

La présente invention vise précisément à remédier aux problèmes énoncés ci-dessus et à permettre en outre la capture des oxydes de soufre à plus basse température que dans les systèmes déjà connus.

Ces buts sont atteints grâce à une installation du type défini en tête de la description et qui comporte selon l'invention :
- un moyen de régénération d'absorbant usé fonctionnant avec des agents réducteurs,
- des moyens destinés à traiter l'absorbant et/ou les gaz de régénération issus dudit moyen de régénération.
- un moyen destiné à divisé l'absorbant usé issu de la première chambre de séparation (13), en une partie vers la chambre de désulfuration (6) et une autre partie vers le moyen (32) de régénération, et
- un moyen (45, 30 ; 48 ; 49) destiné à recycler vers la chambre de désulfuration (6) l'absorbant régénéré issu directement ou indirectement du moyen de régénération
et en ce que l'absorbant est essentiellement constitué d'un absorbant magnésien régénérable.

Avantageusement, l'installation selon l'invention comporte en outre un moyen de stockage intermédiaire de l'absorbant usé.

De façon particulière, la chambre de désulfuration est intercalée entre deux zones d'échange par convection.

Avantageusement, le moyen de régénération d'absorbant usé comporte au moins une première sortie pour des gaz de régénération et une seconde sortie destinée aux solides régénérés, la seconde sortie pouvant être reliée à une entrée du moyen de stockage intermédiaire, ou bien à la chambre de désulfuration.

De façon préférentielle, le moyen de régénération d'absorbant usé est du type à lit fluidisé et comporte une pluralité d'entrées pour un gaz réducteur, destinées à distribuer ledit gaz réducteur sur toute la section du lit.

Avantageusement, le moyen de stockage intermédiaire d'absorbant comporte au moins une première sortie reliée à une entrée dudit moyen de régénération d'absorbant.

En outre, le moyen de stockage intermédiaire d'absorbant peut comporter une seconde sortie reliée audit moyen d'injection d'absorbant dans ladite chambre de désulfuration.

Selon une autre caractéristique de l'invention, l'installation comprend une seconde chambre de séparation alimentée par lesdits gaz de régénération issus dudit moyen de régénération, et pourvue d'au moins une première sortie de gaz débarrassés de la plupart des particules d'absorbants et d'une seconde sortie pour l'absorbant solide régénéré.

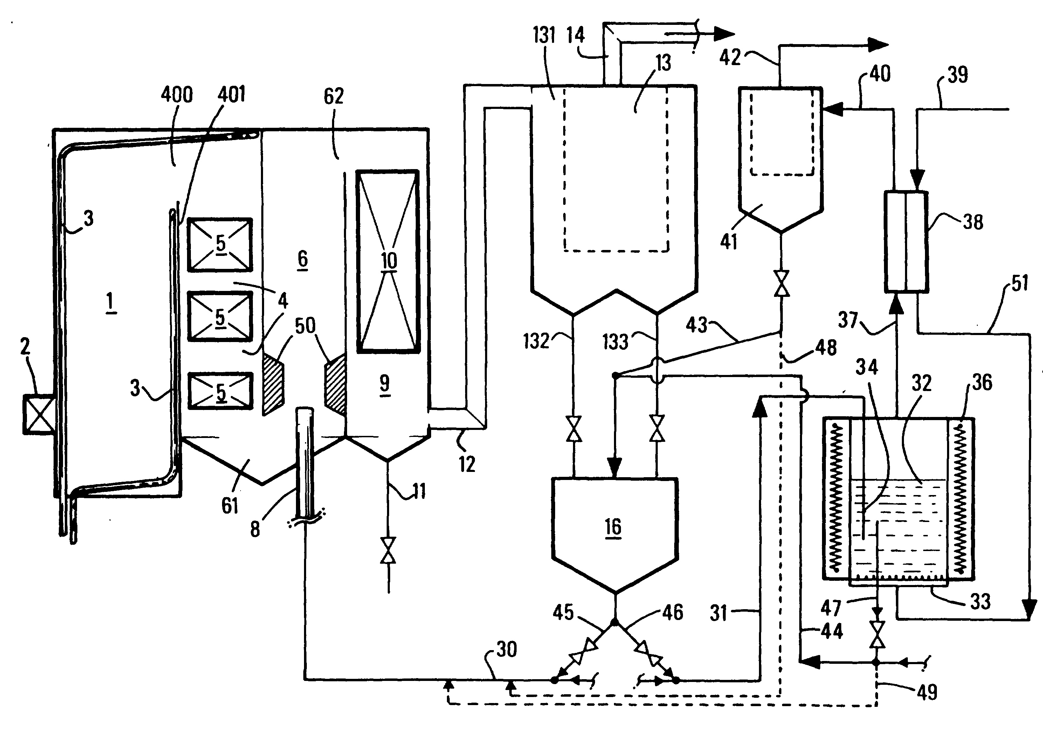

L'invention sera mieux comprise à la lecture de la description faite ci-après, à titre indicatif mais non limitatif, en référence à l'unique figure ci-annexée.

Cette figure représente une installation selon l'invention qui comporte une chambre de combustion 1 allongée, de préférence verticale, dans laquelle peut brûler un combustible contenant notamment du soufre. Le combustible peut être par exemple un résidu pétrolier, un gaz comportant des composés soufrés, ou encore un charbon.

La chambre de combustion est équipée d'au moins un brûleur tel que 2 de préférence placé en partie basse de la chambre 1. Une partie de l'énergie produite par les brûleurs lors de la combustion est avantageusement transmise à un circuit d'échange de chaleur par l'intermédiaire de tubes d'échange 3 placés près des parois de la chambre de combustion 1.

Ainsi, la température des effluents gazeux dans la chambre de combustion se situe généralement entre 800 et 2.000°C.

Une ouverture 400 située en partie haute de la chambre de combustion assure la communication avec une première zone 4 d'échange par convection.

Cette zone 4 qui présente une paroi 401 commune avec la chambre de combustion 1, est traversée par les fumées de combustion animées d'un mouvement vertical descendant. Des échangeurs 5 sont avantageusement placés dans la zone 4, de sorte que la température des gaz effluents au niveau de la sortie 61 de cette zone d'échange 4 se situe entre 400 et 800°C.

Sans sortir du cadre de l'invention, la zone d'échange par convection 4, peut être équipée de tous moyens connus de l'homme de l'art et qui permettent de maintenir une température constante en sortie de cette zone 4, quel que soit le débit de gaz qui la traverse.

La sortie 61 de la zone 4 d'échange convectif est aussi l'entrée d'une chambre de désulfuration 6. A proximité de la sortie 61, c'est-à-dire en partie basse de la chambre de désulfuration, des injecteurs 8 d'absorbant sont fixés. Ces injecteurs sont destinés à injecter l'absorbant de façon appropriée, afin d'obtenir un dispersement rapide de l'absorbant dans le courant des fumées à traiter. La granulométrie de l'absorbant est par exemple comprise entre 0,1 et 200 micromètres, de préférence entre 1 et 20 micromètres.

Les parois de la chambre de désulfuration 6 peuvent comprendre des tubes-membranes. En outre, des singularités 50 peuvent être placées à la partie inférieure de la chambre de désulfuration 6 afin de favoriser la turbulence et le mélange de l'absorbant avec les fumées à traiter.

L'injection d'absorbant sera effectuée de préférence pneumatiquement par tout moyen connu en soi, à travers une conduite spécifique 30.

Le mélange tourbillonnant traverse donc la chambre de désulfuration 6 de bas en haut, avec une vitesse telle que l'intégralité de l'absorbant est entraînée en sortie de la chambre 6.

La sortie 62 de la chambre de désulfuration 6 est donc de préférence située en partie haute de la chambre de désulfuration.

Le temps de séjour des gaz dans la chambre de désulfuration peut être compris entre 0,1 et 4 secondes, de préférence entre 0,5 et 1,5 secondes.

Le mélange passe ensuite dans une seconde zone d'échange convectif 9, dans laquelle il est animé d'un mouvement vertical descendant.

La seconde zone d'échange convectif 9 est par exemple équipée d'un ou plusieurs échangeurs 10, de type connu de l'homme de métier, afin de refroidir le mélange.

Dans la partie basse de la seconde zone d'échange convectif 9 peut en outre être prévue une évacuation 11 pour les solides qui ont éventuellement sédimenté dans la seconde zone d'échange convectif.

En sortie de la seconde zone d'échange convectif 9, la majeure partie des fumées est entraînée, via une conduite appropriée 12 vers l'entrée 131 d'une unité 13 destinée à séparer les solides des gaz, encore appelée "dépoussiéreur". Cette unité 13, connue en soi, peut être par exemple un filtre à manches ou un filtre électrostatique, dans lequel les particules d'absorbant usagé sont recueillies tandis que les gaz effluents, débarrassés de la majeure partie de leurs polluants sont évacués par une conduite 14, par exemple vers une cheminée de mise à l'atmosphère.

L'installation qui vient d'être décrite et le procédé de fonctionnement associé, font, à quelques modifications près, partie de l'art antérieur tel que défini en tête de la description.

De façon différente, selon l'invention, l'absorbant utilisé est essentiellement un absorbant régénérable, de préférence magnésien.

La capacité de l'absorbant à se régénérer implique de nombreux avantages brièvement énoncés dans la partie introductive de la description, et qui seront exposés de façon plus détaillée ci-après.

Bien entendu, cette caractéristique nécessite un certain aménagement de l'installation, tel que présenté maintenant.

La sortie de l'unité 13 de séparation, du côté de l'absorbant usé, peut comporter deux conduites 132, 133 qui se déversent dans une trémie de stockage intermédiaire 16.

A partir de cette trémie 16, une partie de l'absorbant usé peut être directement renvoyée vers le ou les injecteurs 8 de la chambre de désulfuration 6 par une ligne 45 puis par la ligne d'injection 30. L'injection via la ligne 30 sera effectuée de préférence pneumatiquement, avec l'assistance d'air ou de vapeur.

L'absorbant va ainsi effectuer un nouveau cycle d'absorption en se mélangeant à nouveau avec les fumées à traiter, au niveau de la chambre de désulfuration 6.

Une autre partie de l'absorbant sortant de la trémie de stockage intermédiaire 16 est en outre dirigée via deux conduites successives 46 et 31 vers un dispositif de régénération 32. Une vanne peut avantageusement être placée sur chacune des conduites 45, 46 afin de contrôler le débit d'absorbant usé (ou sulfaté).

La trémie de stockage intermédiaire 16 n'est cependant pas indispensable à l'invention. Une division du débit d'absorbant peut être envisagée en sortie de l'unité 13 de séparation, afin de diriger l'absorbant à la fois vers la chambre de désulfuration 6 et vers le dispositif de régénération 32.

Le dispositif de régénération 32 fonctionne par exemple en lit fluidisé dense comme expliqué maintenant. L'absorbant sulfaté est introduit à l'intérieur même du lit fluidisé par une canne plongeante 34. Le lit fluidisé fonctionne de façon préférentielle à une température de l'ordre de 650°C.

L'énergie nécessaire pour conserver cette température est obtenue par des éléments de chauffage électrique 36 disposés autour de la cuve renfermant le lit fluidisé. Il est en effet important pour le bon déroulement de la réaction à l'intérieur du lit fluidisé qu'une température spécifique soit maintenue dans la zone de réaction.

Le gaz réducteur de régénération peut être introduit au niveau du fond de la cuve via une conduite 51 et un échangeur de chaleur 38 destiné au préchauffage du gaz. Un diffuseur 33 permet de distribuer uniformément ce gaz sur toute la section du lit fluidisé.

Les agents réducteurs utilisés sont par exemple l'hydrogène, l'hydrogène sulfuré, le gaz naturel, les gaz de raffinerie... Le gaz réducteur de régénération peut être dilué dans un gaz chimiquement inerte.

En sortie du régénérateur, c'est-à-dire, après passage : travers le lit fluidisé 32, les gaz qui renferment de l'hydrogène sulfuré et/ou du dioxyde de soufre et qui contiennent tout ou partie de l'absorbant régénéré ainsi que l'agent réducteur résiduel, sont évacués par une conduite 37 et passent à travers l'échangeur de chaleur 38 où ils sont refroidis.

Les gaz ainsi refroidis sont envoyés vers une seconde unité de séparation (ou dépoussiéreur) 41 qui évacue d'une part de l'absorbant régénéré par une première conduite 43 et d'autre part des gaz de régénération débarrassés des particules d'absorbant via une seconde conduite 42.

L'absorbant régénéré peut être dirigé par la première conduite 43 vers la trémie 16 de stockage intermédiaire. Il est également envisageable, sans sortir du cadre de l'invention, de diriger l'absorbant régénéré directement vers la chambre de désulfuration 6 comme représenté par la ligne en pointillés 48.

Une autre extraction d'absorbant régénéré peut être réalisée grâce à une ligne de soutirage 47 prenant naissance au fond de la cuve du dispositif de régénération 32. L'absorbant extrait à ce niveau peut être renvoyé dans la trémie de stockage intermédiaire 16 grâce à une conduite 44 appropriée. Cet absorbant peut également être renvoyé directement vers la chambre de désulfuration 6 par une ligne 49 (représentée en traits mixtes sur la figure).

En ce qui concerne les gaz de régénération débarrassés des particules d'absorbant régénéré, issus de la seconde unité de séparation 41, ils peuvent être envoyés vers une unité de traitement (non représenté) destinée à séparer et à récupérer le soufre et/ou les dérivés du soufre.

Une fois débarrassé des éléments soufrés, le gaz peut avantageusement être réintroduit dans le dispositif de régénération 32, grâce à une conduite 39 amenant ce gaz soit directement dans la cuve, soit en passant à travers l'échangeur de chaleur 38.

De ce qui précède, il ressort que les absorbants magnésiens peuvent effectuer en alternance des cycles d'absorption et des cycles de régénération. Des essais ont montré qu'ils peuvent effectuer entre 500 et 50.000 cycles avant d'être rejetés définitivement. Le rejet d'absorbant usé est donc diminué d'un facteur 500 à 50.000 par rapport à une chaudière désulfurante n'utilisant pas d'absorbant magnésien, ce qui est considérable.

Les très faibles quantités d'absorbant usé rejetées permettent par exemple d'envisager une vitrification des rejets avant le stockage définitif. Il est également possible de récupérer ces métaux par un traitement humide approprié. Ces traitements possibles de l'absorbant usé, qui sont simples et facilement contrôlables, diminuent donc considérablement les risques de contamination des nappes phréatiques.

Par ailleurs, l'utilisation d'absorbants magnésiens permet de concentrer les métaux lourds tels que vanadium, nickel, chrome, manganèse, cobalt, zinc captés dans les fumées.

D'autre part, le soufre généré par la combustion peut être récupéré en tant que tel (grâce à une unité Claus), puis retraité ultérieurement, c'est-à-dire valorisé.

Enfin, la consommation énergétique supplémentaire créée par l'utilisation d'absorbants régénérables est faible, comprise entre 0,2 et 2 % de la puissance totale de la chaudière.

Le dispositif de régénération 32 peut être, non pas une cuve qui fonctionne en lit fluidisé, mais par exemple un four tournant.

## Revendications

1. Installation de génération de chaleur comprenant une chambre de combustion (1), au moins une zone d'échange par convection (4, 9), une chambre de désulfuration (6) comportant au moins un moyen d'injection (8) d'un absorbant et communiquant avec une première zone d'échange par convection (4), une première chambre de séparation (13) reliée à ladite première zone d'échange par convection (9), ladite chambre de séparation ayant au moins une sortie (132, 133) pour l'absorbant usé et une sortie (14) pour les gaz dépollués, caractérisée en ce qu'elle comporte en outre :
- un moyen (32) de régénération d'absorbant usé fonctionnant avec des agents réducteurs,
- des moyens (38, 41) destinés à traiter les gaz de régénération issus dudit moyen de régénération (32),
- un moyen destiné à diviser l'absorbant usé issu de la première chambre de séparation (13), en une partie vers la chambre de désulfuration (6) et une autre partie vers le moyen (32) de régénération, et
- un moyen (45, 30 ; 48 ; 49) destiné à recycler vers la chambre de désulfuration (6) l'absorbant régénéré issu directement ou indirectement du moyen de régénération
et en ce que l'absorbant est essentiellement constitué d'un absorbant magnésien régénérable.

2. Installation selon la revendication 1, caractérisée en ce qu'elle comporte en outre un moyen de stockage intermédiaire (16) de l'absorbant usé.

3. Installation de génération de chaleur selon l'une quelconque des revendications précédentes, caractérisée en ce que ladite chambre de désulfuration (6) est intercalée entre deux zones d'échange par convection (4, 9).

4. Installation selon l'une quelconque des revendications précédentes, caractérisée en ce que ledit moyen (32) de régénération d'absorbant usé comporte au moins une première sortie (37) pour des gaz de régénération et une seconde sortie (47, 44 ; 47, 49) destinée aux solides régénérés.

5. Installation selon la revendication 4, caractérisée en ce que la seconde sortie (47, 44) est reliée au moyen de stockage intermédiaire (16).

6. Installation selon la revendication 4, caractérisée en ce que ladite seconde sortie (47, 49) est reliée au moyen (8) destiné à injecter l'absorbant dans la chambre de désulfuration (6).

7. Installation selon l'une quelconque des revendications précédentes, caractérisée en ce que ledit moyen (32) de régénération d'absorbant usé est du type à lit fluidisé et comporte une pluralité d'entrées (33) pour un gaz réducteur, destinées à distribuer ledit gaz réducteur sur toute la section du lit.

8. Installation selon l'une des revendications 1 à 6, caractérisée en ce que ledit moyen (32) de régénération d'absorbant usé est un four tournant.

9. Installation selon l'une quelconque des revendications 2 à 8, caractérisée en ce que ledit moyen (16) de stockage intermédiaire d'absorbant comporte au moins une première sortie (46) reliée à une entrée dudit moyen (32) de régénération d'absorbant.

10. Installation selon la revendication 9, caractérisée en ce que ledit moyen (16) de stockage intermédiaire d'absorbant comporte en outre une seconde sortie (45) reliée audit moyen (8) d'injection d'absorbant dans ladite chambre de désulfuration.

11. Installation selon l'une quelconque des revendications précédentes, caractérisée en ce que lesdits moyens de traitement de l'absorbant comportent une seconde chambre de séparation (41) alimentée par lesdits gaz de régénération issus dudit moyen de régénération (32), et pourvue d'au moins une première sortie (42) des gaz débarrassés de la plupart des particules d'absorbants et d'une seconde sortie (43 ; 48) pour l'absorbant solide régénéré.

12. Installation selon la revendication 11, caractérisée en ce que ladite seconde sortie (43) de la seconde chambre de séparation (41) est reliée au moyen de stockage intermédiaire (16) afin de l'alimenter en absorbant régénéré.

13. Installation selon la revendication 11, caractérisée en ce que ladite seconde sortie (48) de la seconde chambre de séparation (41) est reliée à au moins un injecteur d'absorbant (8) de la chambre de désulfuration (6).

14. Installation selon l'une quelconque des revendications 11 à 13, caractérisée en ce que ladite première sortie (42) est reliée à une unité de traitement spécifique.

15. Installation selon la revendication 14, caractérisée en ce que ladite unité de traitement spécifique alimente ledit moyen de régénération (32) en gaz réducteur.

16. Installation selon l'une quelconque des revendications précédentes, caractérisée en ce que lesdits moyens de traitement des gaz issus du moyen de régénération comportent un échangeur de chaleur (38) entre les gaz réducteurs destinés au moyen (32) de régénération et les gaz régénérés issus dudit moyen (32) de régénération.

## Patentansprüche

1. Anlage zur Wärmeerzeugung umfassend: eine Brennkammer (1), wenigstens eine Konvektionswärmeaustauscherzone (4, 9), eine Entschwefelungskammer (6), die wenigstens ein Mittel zur Injizierung (8) eines Absorptionsmittels umfaßt und mit einer ersten Konvektionsaustauscherzone (4) in Verbindung steht, eine erste Trennkammer (13), die mit der ersten Konvektionsaustauscherzone (9) verbunden ist, wobei die Trennkammer wenigstens einen Ausgang (132, 133) für das verbrauchte Absorptionsmittel und einen Ausgang (14) für die von Verunreinigungen befreiten Gase hat, dadurch gekennzeichnet, daß sie im übrigen umfaßt:
- ein Mittel (32) zur Regenerierung des verbrauchten Absorptionsmittels, das mit reduzierenden Agenzien arbeitet,
- Mittel (38, 41), die dazu bestimmt sind, die aus diesem Regenerierungsmittel (32) stammenden Regenerierungsgase zu behandeln,
- ein Mittel, das dazu bestimmt ist, das verbrauchte aus der ersten Trennkammer (13) stammende Absorptionsmittel aufzuteilen in einen ersten Teil zur Entschwefelungskammer (6) und einen anderen Teil zum Regenerierungsmittel (32) und
- ein Mittel (45, 30; 48; 49), das dazu bestimmt ist, zur Entschwefelungskammer (6) das regenerierte Absorptionsmittel zu rezyklieren, das direkt oder indirekt aus dem Regenerierungsmittel stammt und daß das Absorptionsmittel im wesentlichen aus einem magnesiumhaltigen regenerierbaren Absorptionsmittel gebildet ist.

2. Anlage nach Anspruch 1, dadurch gekennzeichnet, daß sie im übrigen ein Mittel zur Zwischenlagerung (16) des verbrauchten Absorptionsmittels umfaßt.

3. Anlage zur Wärmeerzeugung nach einem der vorhergehenden Ansprüche, dadurch gekennzeichnet, daß diese Entschwefelungskammer (6) zwischen zwei Konvektionsaustauscherzonen (4, 9) zwischengesetzt ist.

4. Anlage nach einem der vorhergehenden Ansprüche, dadurch gekennzeichnet, daß dieses Mittel (32) zur Regenerierung verbrauchten Absorptionsmittels wenigstens einen ersten Ausgang (37) für Regenerierungsgase und einen zweiten Ausgang (47, 44; 47, 49) umfaßt, der für regenerierte Feststoffe bestimmt ist.

5. Anlage nach Anspruch 4, dadurch gekennzeichnet, daß der zweite Ausgang (47, 44) mit dem Zwischenlagerungsmittel (16) verbunden ist.

6. Anlage nach Anspruch 4, dadurch gekennzeichnet, daß dieser zweite Ausgang (47, 49) mit dem Mittel (8) verbunden ist, das dazu bestimmt ist, das Absorptionsmittel in die Entschwefelungskammer (6) zu injizieren.

7. Anlage nach einem der vorhergehenen Ansprüche, dadurch gekennzeichnet, daß dieses Mittel (32) zum Regenerieren des verbrauchten Absorptionsmittels vom Typ mit Wirbelbett ist und eine Vielzahl von Eingängen (33) für ein reduzierendes Gas umfaßt, die dazu bestimmt sind, dieses reduzierende Gas über den gesamten Querschnitt des Betts zu verteilen.

8. Anlage nach einem der Ansprüche 1 bis 6, dadurch gekennzeichnet, daß dieses Regenerierungsmittel (32) für das verbrauchte Absorptionsmittel ein Drehofen ist.

9. Anlage nach einem der Ansprüche 2 bis 8, dadurch gekennzeichnet, daß dieses Mittel (16) zur Zwischenlagerung des Absorptionsmittels wenigstens einen ersten Ausgang (46) umfaßt, der mit einem Eingang dieses Regenerierungsmittels (32) für das Absorptionsmittel verbunden ist.

10. Anlage nach Anspruch 9, dadurch gekennzeichnet, daß dieses Mittel (16) zur Zwischenlagerung von Absorptionsmittel im übrigen einen zweiten Ausgang (45) umfaßt, der mit diesem Mittel (8) zur Injektion von Absorptionsmittel in diese Entschwefelungskammer verbunden ist.

11. Anlage nach einem der vorhergehenden Ansprüche, dadurch gekennzeichnet, daß diese Mittel zur Behandlung von Absorptionsmittel eine zweite Trennkammer (41) umfassen, die mit aus dem Regenerierungsmittel (32)stammenden Regenerierungsgasen gespeist ist und mit wenigstens einem ersten Ausgang (42) für die vom größten Teil der Absorptionsmittel befreiten Gase und einem zweiten Ausgang (43; 48) für das regenerierte feste Absorptionsmittel versehen ist.

12. Anlage nach Anspruch 11, dadurch gekennzeichnet, daß dieser zweite Ausgang (43) der zweiten Trennkammer (41) mit dem Zwischenlagerungsmittel (16) verbunden ist, um es mit regeneriertem Absorptionsmittel zu speisen.

13. Anlage nach Anspruch 11, dadurch gekennzeichnet, daß dieser zweite Ausgang (48) der zweiten Trennkammer (41) mit wenigstens einem Absorptionsmittelinjektor (8) der Entschwefelungskammer (6) verbunden ist.

14. Anlage nach einem der Ansprüche 11 bis 13, dadurch gekennzeichnet, daß dieser erste Ausgang (42) mit einer spezifischen Behandlungseinheit verbunden ist.

15. Anlage nach Anspruch 14, dadurch gekennzeichnet, daß diese spezifische Behandlungseinheit dieses Regenerierungsmittel (32) mit reduzierendem Gas speist.

16. Anlage nach einem der vorhergehenden Ansprüche, dadurch gekennzeichnet, daß diese Behandlungsmittel der aus dem Regenerierunsmittel stammenden Gase einen Wärmeaustauscher (38) zwischen den für das Regenerierungsmittel (32) bestimmten reduzierenden Gasen und den aus diesen Regenerierunsmittel (32) stammenden regenerierten Gasen umfassen.

## Claims

1. Heat-generating plant comprising a combustion chamber (1), at least one convection exchange zone (4, 9), a desulphurisation chamber (6) having at least one means for injecting (8) an absorbent and communicating with a first zone of convection heat exchange (4), a first separation chamber (13) linked to the said first zone of convection heat exchange (9), the said separation chamber having at least one outlet (132, 133) for the spent absorbent and an outlet (14) for the de-polluted gases, characterised in that it also has:
- a means (32) for regenerating spent absorbent operated in conjunction with reducing agents,
- means (38, 41) designed to treat the regeneration gases leaving the said regenerating means (32),
- a means for splitting the spent absorbent from the first separation chamber (13) into a part fed to the desulphurisation chamber (6) and another part fed to the regenerating means (32), and
- a means (45, 30; 48, 49) for recycling to the desulphurisation chamber (6) the regenerated absorbent discharged directly or indirectly from the regenerating means
and in that the absorbent is a regenerable, mainly magnesium-based absorbent.

2. Plant as claimed in claim 1, characterised in that it also has an intermediate storage means (16) for the spent absorbent.

3. Heat generating plant as claimed in any one of the preceding claims, characterised in that the said desulphurisation chamber (6) is incorporated between two zones of convection heat exchange (4, 9).

4. Plant as claimed in any one of the preceding claims, characterised in that the said means (32) for regenerating spent absorbent has at least one outlet (37) for the regeneration gases and a second outlet (47, 44; 47, 49) for the regenerated solids.

5. Plant as claimed in claim 4, characterised in that the second outlet (47, 44) is linked to the intermediate storage means (16).

6. Plant as claimed in claim 4, characterised in that the said second outlet (47, 49) is linked to the means (8) for injecting the absorbent into the desulphurisation chamber (6).

7. Plant as claimed in any one of the preceding claims, characterised in that the said means (32) for regenerating spent absorbent is of the fluidised bed type and has a plurality of inlets (33) for a reducing gas, designed to distribute the reducing gas across the entire section of the bed.

8. Plant as claimed in one of claims 1 to 6, characterised in that the said means (32) for regenerating spent absorbent is a revolving furnace.

9. Plant as claimed in any one of claims 2 to 8, characterised in that the said intermediate storage means (16) for the spent absorbent has at least a first outlet (46) linked to an inlet of the said absorbent regenerating means (32).

10. Plant as claimed in claim 9, characterised in that the said intermediate absorbent storage means (16) also has a second outlet (45) linked to the said means (8) for injecting absorbent into the said desulphurisation chamber.

11. Plant as claimed in any one of the preceding claims, characterised in that the said absorbent treating means have a second separation chamber (41), supplied by the said regeneration gases from the said regeneration means (32), which is provided with at least a first outlet (42) for the gases from which the greater part of the absorbent particles have been removed and a second outlet (43; 48) for the solid absorbent regenerated.

12. Plant as claimed in claim 11, characterised in that the second outlet (43) of the second separation chamber (41) is linked to the intermediate storage means (16) in order to supply regenerated absorbent.

13. Plant as claimed in claim 11, characterised in that the second outlet (48) of the second separation chamber (41) is linked to at least one absorbent injector (8) of the desulphurisation chamber (6).

14. Plant as claimed in any one of claims 11 to 13, characterised in that the said first outlet (42) is linked to a specific treatment unit.

15. Plant as claimed in claim 14, characterised in that the said specific treatment unit supplies the said regenerating means (32) with reducing gas.

16. Plant as claimed in any one of the preceding claims, characterised in that the said means for treating the gases from the regenerating means have a heat exchanger (38) between the reducing gases for the regenerating means (32) and the regenerated gases discharged from the regeneration means (32) .
